(19)

Europäisches
Patentamt
European
Patent Office
Office européen
des brevets

(11) **EP 2 106 090 A1**

(12) **EUROPEAN PATENT APPLICATION**
published in accordance with Art. 153(4) EPC

(43) Date of publication:
**30.09.2009 Bulletin 2009/40**

(51) Int Cl.:
*H04L 29/06* (2006.01)

(21) Application number: **08851641.4**

(22) Date of filing: **18.11.2008**

(86) International application number:
**PCT/CN2008/073097**

(87) International publication number:
**WO 2009/065356 (28.05.2009 Gazette 2009/22)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.11.2007 CN 200710177632**

(71) Applicant: **Huawei Technologies Co., Ltd.
Longgang District, Shenzhen
Guangdong 518129 (CN)**

(72) Inventors:
 • **CAO, Zhenfu
  Shenzhen
  Guangdong 518129 (CN)**
 • **DONG, Xiaolei
  Shenzhen
  Guangdong 518129 (CN)**

 • **LU, Rongxing
  Shenzhen
  Guangdong 518129 (CN)**
 • **CHAI, Zhenchuan
  Shenzhen
  Guangdong 518129 (CN)**
 • **WEI, Jiwei
  Shenzhen
  Guangdong 518129 (CN)**

(74) Representative: **Barth, Stephan Manuel et al
Reinhard, Skuhra, Weise & Partner GbR
Patent- und Rechtsanwälte
Friedrichstrasse 31
80801 München (DE)**

(54) **A METHOD, SYSTEM AND NETWORK DEVICE FOR MUTUAL AUTHENTICATION**

(57)    The present invention discloses a bidirectional
authentication method, a system, and a network device,
and relates to network information security. The method
may include: a network device generates an inspection
parameter according to a public key of the peer network
device and a private key of the network device, the public
key and the private key of the network device being gen-
erated according to an identifier of the network device;
and the network device performs reciprocal authentica-
tion according to the inspection parameter generated by
the network device and an inspection parameter sent by
the peer network device. A system and a network device
for bidirectional authentication are also provided herein.
As such, extra calculation caused by certificate authen-
tication is cut down, the system is more secure and reli-
able, and the key management is simplified.

FIG. 1

## Description

FIELD

The present invention relates to network information security, and in particular, to a method, a system, and a network device for bidirectional authentication.

BACKGROUND

For designers and developers of most systems and application networks, security is always a challenging and critical issue. For both ordinary PC systems and the gateway systems of the enterprise, various attacks and unauthorized accesses tend to cause loss of key data, and thus cause inestimable losses.

On April 8, 2003, the Trusted Computing Group (TCG) was founded. As a standards organization accepted in the industry, the TCG has designed basic modules of trusted hardware, and developed trusted software to resist various virtual or physical attacks. The products under such standards can be easily applied to embedded design.

A Trusted Platform Module (TPM) is a basis of trusted computing. Generally, a TPM is a small piece of silicon attached to a device, namely, a security micro controller capable of cryptographic operation. The TPM is assembled together with the PC chipset through a Low Pin Count (LPC) bus. The TPM is responsible for:

storing confidential information such as password, certificate, and key information, with a view to preventing software attacks;
generating high-quality keys through a random number generator;
performing private key processing within a unit; and
storing standard information related to software integrity for estimating integrity of executable software.

As a basis of trusted computing, the TPM is applicable not only to ordinary PCs and other computing devices, but also to the Internet. By implanting a TPM on each network terminal, a trusted Internet platform is constructed.

In the process of implementing the foregoing technical solution, the inventor finds at least the following defects in the foregoing technical solution:

Reciprocal authentication and key negotiation between both parties to communication are a basis of the trusted Internet. The TPM module in the prior art implements authentication based on the cryptographic system of the Public Key Infrastructure (PKI), and an extra digital certificate is required to bind the public key of the platform to the platform identity (such as serial number). Consequently, in the process of authenticating the platform, the certificate needs to be authenticated additionally. Moreover, transmission of the certificate occupies extra network bandwidth, and the management on the certificate is rather complicated and requires support of the PKI.

SUMMARY

In order to make the authentication process of the trusted network platform simpler and more reliable, a bidirectional authentication method, a system, and a network device are disclosed in various embodiments of the present invention by reference to the identity-based cryptography. The technical solution under the present invention is as follows.

A method for bidirectional authentication includes:

generating, by a first network device, an inspection parameter according to a public key of the second network device and a private key of the first network device;
generating, by the second network device, an inspection parameter according to a public key of the first network device and a private key of the second network device, where the public key and the private key of the first network device are obtained according to an identifier of the first network device, and the public key and the private key of the second network device are obtained according to an identifier of the second network device;
authenticating, by the first network device, the second network device according to the inspection parameter generated by the first network device and the inspection parameter received from the second network device; and
authenticating, by the second network device, the first network device according to the inspection parameter generated by the second network device and the inspection parameter received from the first network device.

A network system includes:

a first network device, configured to: generate an inspection parameter according to the public key of the second network device and the private key of the first network device, receive the inspection parameter from the second network device, and perform authentication with the second network device according to the generated inspection parameter and the received inspection parameter; and

a second network device, configured to: generate an inspection parameter according to the public key of the first network device and the private key of the second network device, receive the inspection parameter from the first network device, and perform authentication with the first network device according to the generated inspection parameter device and the received inspection parameter.

A network device includes:

a public key and private key generating module, configured to generate a public key and a private key of the network device according to an identifier of the network device; and

an authenticating module, configured to: generate an inspection parameter according to the public key of the peer network device and the private key of the network device, receive the inspection parameter from the peer network device, and perform authentication with the peer network device according to the inspection parameter generated by the network device and the received inspection parameter.

The embodiments of the present invention provide at least the following benefits:

The identity-based cryptography is integrated and applied to a trusted Internet platform. The device identity is a public key, without requiring extra certificates. Therefore, extra calculation caused by certificate authentication is cut down, and the network can perform reciprocal authentication and key negotiation directly after being deployed.

BRIEF DESCRIPTION OF THE DRAWINGS

In order to make the technical solution under the present invention or in the prior art clearer, the accompanying drawings for illustrating the embodiments of the present invention or illustrating the prior art are described briefly below. Evidently, the accompanying drawings are for the exemplary purpose only, and those skilled in the art can derive other drawings from such accompanying drawings without making any creative effort.

FIG. 1 is a flowchart of a bidirectional authentication method disclosed in the first embodiment of the present invention;

FIG. 2 is a network system disclosed in the second embodiment of the present invention;

FIG. 3 shows a network device disclosed in the third embodiment of the present invention; and

FIG. 4 shows a network device disclosed in the fourth embodiment of the present invention.

DETAILED DESCRIPTION

The technical solution under the present invention is expounded below by reference to accompanying drawings. Evidently, the embodiments given herein are only part of the embodiments of the present invention. Evidently, those skilled in the art can derive other embodiments from the embodiments given herein without making any creative effort, and all such embodiments are covered by the protection scope of the present invention.

In order to make the technical solution, objectives and merits of the present invention clearer, the embodiments of the present invention are described below in detail by reference to accompanying drawings.

The technical solution under the present invention combines the TPM with the identity-based cryptography, and puts forward a method, a system and a network device of bidirectional authentication based on an elliptic curve bilinear pairing technology. The method disclosed herein includes:

generating, by a first network device, an inspection parameter according to a public key of the second network device and a private key of the first network device;

generating, by the second network device, an inspection parameter according to a public key of the first network device and a private key of the second network device, where the public key and the private key of the first network device are obtained according to an identifier of the first network device, and the public key and the private key of the second network device are obtained according to an identifier of the second network device;

authenticating, by the first network device, the second network device according to the inspection parameter generated by the first network device and the inspection parameter received from the second network device; and

authenticating, by the second network device, the first network device according to the inspection parameter generated by the second network device and the inspection parameter received from the first network device.

Supposing that the first network device is a first network terminal and the second network device is a second network terminal, the method under the present invention is detailed below.

First, the involved parameters are defined hereinafter.

Supposing that $G_1$ is a cyclic additive group and $G_2$ is a cyclic multiplicative group, and they are have the same prime order $q$, $e : G_1 \times G_1 \to G_2$ is a bilinear mapping, which takes on the following three characteristics:

Bilinearity: For any $P, Q \in G_1$ and $a, b \in Z_q^*$, $e(aP,bQ) = e(P, Q)^{ab}$, where $Z_q^*$ is a set of all positive integers that are less than q and coprime with q;

Non-degeneration: $p \in G_1$, $Q \in G_1$, and $e(P, Q) \neq 1$; and

Computability: For any $P,Q \in G_1$, a polynomial time algorithm exists for calculating $e(P,Q)$.

Supposing that $G_1$ is a Gap Diffie-Hellman group, namely, the computing-related Diffie-Hellman problems in $G_1$ are difficult but the judging-related Diffie-Hellman problems in $G_1$ are easy, the open parameters of the system are $\{G_1,G_2, q,P\}$.

Afterward, the system initialization is performed as below.

First, the trusted network key distributor generates a system parameter according to the security parameter $1^k$:

$$\left\langle q,G_1,G_2,e,s,P,P_{pub} = sP,H_1,H_2,H_3 \right\rangle,$$

where:

q is a prime number;

$G_1$ is a cyclic additive group using the prime number $q$ as an order and $G_2$ is a cyclic multiplicative group using the prime number $q$ as an order;

$e : G_1 \times G_1 \to G_2$ is a bilinear mapping;

s is a value selected from the group $Z_q^*$ randomly as a private key of the trusted network key distributor;

$P$ is a generator of $G_1$; $P_{pub} = sP$ serves as the corresponding public key of the system; and

$H_1 : \{0,1\}^* \to G_1$, $H_2 : \{0,1\}^* \to \{0,1\}^l$, and $H_3 : \{0,1\}^* \to \{0,1\}^l$ are cryptographic Hash functions, where $l$ is another security parameter and k is the bit length.

Besides, trusted network key distributor generates a trusted group key $SK_{TG}$. Throughout the system, each network terminal can calculate the peer public key $Q_I = H_1(ID_I) \in G_1$ through the $H_1 : \{0,1\}^* \to G_1$ and the unique identifier $ID_I$ of the peer.

The TPM distributes keys and sets up a trusted network terminal. When a network terminal becomes a trusted network terminal, the trusted network key distributor generates the corresponding terminal private key $S_I = sH_1(ID_I)$ according to the terminal identifier $ID_I$, and then injects the system parameter $\langle q,G_1,G_2,e,s,P,P_{pub} = sP,H_1,H_2,H_3 \rangle$, the terminal private key $S_I$ and the trusted group key $SK_{TG}$ into the TPM, and finally embeds the TPM into the network terminal, thus setting up a trusted network terminal.

The trusted group key $SK_{TG}$ is distributed to each network terminal through the TPM, thus accomplishing reciprocal authentication between the trusted network terminals. The terminals other than the trusted group are unaware of the key of the trusted group, and therefore, are not responsive to reciprocal authentication. If secure communication needs to be performed between two trusted network terminals on the trusted network platform, bidirectional authentication is performed and a security session key is created.

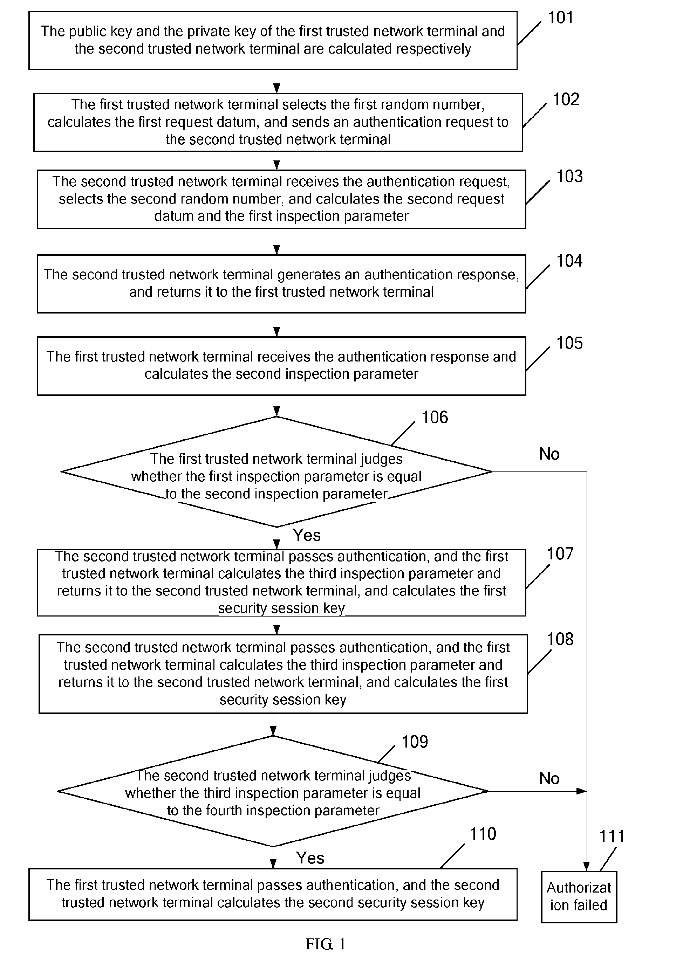

As shown in FIG. 1, a method of bidirectional authentication on a trusted network platform is disclosed in an embodiment of the present invention.

The method includes:

generating a public key and a private key of the network terminal according to the network terminal identifier;

sending, by the first network terminal, an authentication request to the second network terminal;

generating, by the second network terminal, the first inspection parameter according to the public key of the first network terminal and the private key of the second network terminal, and returning an authentication response inclusive of the first inspection parameter to the first network terminal;

generating, by the first network terminal, the second inspection parameter according to the public key of the second network terminal and the private key of the first network terminal, and authenticating the second network terminal according to the first inspection parameter and the second inspection parameter;

generating the third inspection parameter according to the public key of the second network terminal and the private key of the first network terminal, and returning the third inspection parameter to the second network terminal; and

generating, by the second network terminal, the fourth inspection parameter according to the public key of the first network terminal and the private key of the second network terminal, and authenticating the first network terminal according to the third inspection parameter and the fourth inspection parameter.

Supposing that the first network terminal is a first trusted network terminal NT-A and the second network terminal is a second trusted network terminal NT-B for performing network security communication, the method includes the following steps:

Step 101: The public key, namely, $Q_A = H_1(ID_A)$, of the first trusted network terminal NT-A is calculated. The private key of the corresponding first trusted network terminal NT-A is $S_A = sH_1(ID_A)$, the public key of the second trusted network terminal NT-B is $Q_B = H_1(ID_B)$, and the private key of the corresponding second trusted network terminal NT-B is $S_B = sH_1(ID_B)$.

The identifier of the first trusted network terminal NT-A is $ID_A$, and the identifier of the second trusted network terminal NT-B is $ID_B$.

Step 102: The first trusted network terminal NT-A selects a random number $r_A \in Z_q^*$, called a first random number. The first request datum $r_AP$ is calculated, and the authentication request ($ID_A$, $r_AP$) is sent to the second trusted network terminal NT-B.

Step 103: After receiving the authentication request ($ID_A$, $r_AP$), the second trusted network terminal NT-B selects another random number $r_B \in Z_q^*$, called a second random number, calculates the second request datum $r_BP$, and obtains the first inspection parameter by performing Hash operation for these values: the first adjoining value obtained by adjoining the NT-A ID ($ID_A$) with the NT-B ID ($I_{DB}$) carried in the authentication request, the first request datum $r_AP$, the second request datum $r_BP$, the product of the first request datum and the second random number, the first mapping value generated by mapping the NT-A public key $Q_A$ and the NT-B private key $S_B$ to the elements in the cyclic multiplicative group through bilinear pairing, and the trusted group key:

$$K_B = H_2(ID_A \parallel ID_B, r_AP, r_BP, r_Ar_BP, e(Q_A, S_B), SK_{TG}).$$

All data for negotiation in the session may be used as input of the Hash function to make the session setup more trustworthy and secure. In this way, attackers are unable to make use of or alter the session setup information.

Step 104: The NT-B generates an authentication response ($ID_B, r_BP, K_B$), and returns it to NT-A.

Step 105: After receiving the authentication response ($ID_B$, $r_BP$, $K_B$), NT-A obtains the second inspection parameter by performing Hash operation for these values: the second adjoining value obtained by adjoining the NT-A ID ($ID_A$) with the NT-B ID ($ID_B$) carried in the received authentication response, the first request datum $r_AP$, the second request datum $r_BP$, the product of the second request datum and the first random number, the second mapping value generated by mapping the NT-B public key $Q_B$ and the NT-A private key $S_A$ to the elements in the cyclic multiplicative group through bilinear pairing, and the trusted group key:

$$K'_B = H_2(ID_A \parallel ID_B, r_AP, r_BP, r_Ar_BP, e(Q_B, S_A), SK_{TG}).$$

Step 106: NT-A judges whether the inspection parameter $K_B$ is equal to the inspection parameter $K'_B$. If they are equal, the process proceeds to step 107; otherwise, the process proceeds to step 111.

Step 107: NT-B passes the authentication. NT-A obtains the third inspection parameter by performing Hash operation for these values: the third adjoining value obtained by adjoining the NT-B ID ($ID_B$) with the NT-A ID ($ID_A$), the first request datum $r_AP$, the second request datum $r_BP$, the product of the second request datum and the first random number, the second mapping value generated by mapping the NT-B public key $Q_B$ and the NT-A private key $S_A$ to the elements in the cyclic multiplicative group through bilinear pairing, and the trusted group key:

$$K_A = H_2(ID_B \| ID_A, r_A P, r_B P, r_A r_B P, e(Q_B, S_A), SK_{TG}).$$

NT-A returns the third inspection parameter $K_A$ to NT-B. NT-A obtains the first security session key by performing Hash operation for these values: the adjoining value obtained by adjoining the NT-A ID ($ID_A$) with the NT-B ID ($ID_B$), the first request datum ($r_A P$), the second request datum ($r_B p$), the product of the first request datum and the second random number, the second mapping value generated by mapping the NT-B public key $Q_B$ and the NT-A private key $S_A$ to the elements in the cyclic multiplicative group through bilinear pairing, and the trusted group key:

$$SK_A = H_2(ID_A \| ID_B, r_A P, r_B P, r_A r_B P, e(Q_B, S_A), SK_{TG}).$$

Step 108: After receiving the third inspection parameter $K_A$ from NT-A, NT-B obtains the fourth inspection parameter by performing Hash operation for these values: the fourth adjoining value obtained by adjoining the NT-B ID ($ID_B$) with the NT-A ID ($ID_A$), the first request datum $r_A P$, the second request datum $r_B P$, the product of the second request datum and the first random number, the first mapping value generated by mapping the NT-B public key $Q_B$ and the NT-A private key $S_A$ to the elements in the cyclic multiplicative group through bilinear pairing, and the trusted group key:

$$K'_A = H_2(ID_B \| ID_A, r_A P, r_B P, r_A r_B P, e(Q_A, S_B), SK_{TG}).$$

Step 109: NT-B judges whether the inspection parameter $K'_A$ is equal to the inspection parameter $K_A$. If they are equal, the process proceeds to step 110; otherwise, the process proceeds to step 111.

Step 110: NT-A passes the authentication. NT-B obtains the second security session key by performing Hash operation for these values: the adjoining value obtained by adjoining the NT-B ID ($ID_B$) with the NT-A ID ($ID_A$), the first request datum $r_A P$, the second request datum $r_B P$, the product of the second request datum and the first random number, the first mapping value generated by mapping the NT-B public key $Q_B$ and the NT-A private key $S_A$ to the elements in the cyclic multiplicative group through bilinear pairing, and the trusted group key:

$$SK_B = H_2(ID_A \| ID_B, r_A P, r_B P, r_A r_B P, e(Q_A, S_B), SK_{TG}).$$

Step 111: Authentication fails.

In $e(Q_A, S_B)$, $S_B = s Q_B$, namely, $e(Q_A, S_B) = e(Q_A, s Q_B)$. Likewise, $e(Q_B, S_A) = e(Q_B, s Q_A)$. Due to bilinearity, $e(Q_A, S_B) = e(Q_A, s Q_B) = e(Q_A, Q_B)^s$ and $e(Q_B, S_A) = e(Q_B, s Q_A) = e(Q_B, Q_A)^s$, namely, $e(Q_A, S_B) = e(Q_B, S_A) = e(Q_A, Q_B)^s$. Therefore, the first security session key $SK_A$ is equal to the second security session key $SK_B$. Meanwhile, the trusted group key $SK_{TG}$ is included in the protocol. Therefore, the terminals outside the group are unable to authenticate the terminals in the group, thus accomplishing the secret handshake protocol.

The trusted group key $SK_{TG}$ is designed to specify that only the members in the group can join the authentication. In general authentication solutions, the trusted group key $SK_{TG}$ is not necessarily applied.

The method disclosed above is applicable to telecom networks (including mobile networks and fixed networks) and the Internet. Accordingly, the foregoing network terminal may be: a basestation, mobile terminal, core node, or border gateway in the mobile network; or a router in the fixed network; or a computer terminal or router in the Internet, and so on. Network terminals include but are not limited to the foregoing network nodes.

Besides, the trusted network key distributor disclosed herein is a logical function entity. The function of the trusted network key distributor may be implemented by setting a stand-alone server, and be integrated in the existing network device. For example, supposing that the method herein is applied to a mobile network, the function of the trusted network key distributor may be integrated in the Home Subscriber Server (HSS)/Home Location Register (HLR) in the existing mobile network, or implemented through a Key Derivation Function (KDF). This embodiment does not impose any restriction onto the specific mode of implementing the trusted network key distributor.

In this embodiment, the identity-based cryptography is integrated and applied to a trusted Internet platform. The device identity is a public key, without requiring extra certificates. Therefore, extra calculation caused by certificate authentication is cut down, and the network can perform reciprocal authentication and key negotiation directly after being deployed.

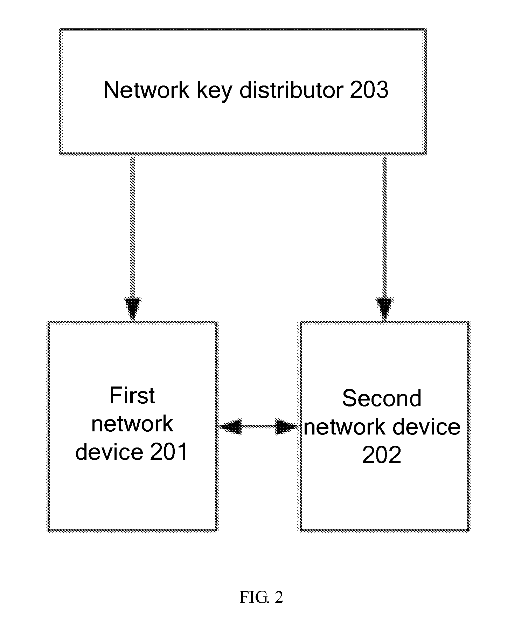

As shown in FIG. 2, a network system is disclosed in this embodiment. The network system includes:

a first network device 201, configured to: generate an inspection parameter according to the public key of the second network device 202 and the private key of the first network device 201, receive the inspection parameter from the second network device 202, and perform authentication with the second network device 202 according to the generated inspection parameter and the received inspection parameter; and
a second network device 202, configured to: generate an inspection parameter according to the public key of the first network device 201 and the private key of the second network device 202, receive the inspection parameter from the first network device 201, and perform authentication with the first network device 201 according to the generated inspection parameter and the received inspection parameter.

Further, the network system disclosed in this embodiment includes:

a network key distributor 203, configured to: generate a system parameter and a group key, and generate a private key of the network device according to an identifier of the network device;
accordingly,
a first network device 201, configured to: generate a public key of the network device according to an identifier of the network device, generate the second inspection parameter according to the public key of the second network device 202 and the private key of the first network device 201, authenticate the second network device 202 according to the first inspection parameter and the second inspection parameter, generate the third inspection parameter according to the public key of the second network device 202 and the private key of the first network device 201, and return the third inspection parameter to the second network device 202; and
a second network device 202, configured to: generate a public key of the network device according to an identifier of the network device, generate the first inspection parameter according to the public key of the first network device 201 and the private key of the second network device 202, return an authentication response inclusive of the first inspection parameter to the first network device 201, generate the fourth inspection parameter according to the public key of the first network device 201 and the private key of the second network device 202, and authenticate the first network device 201 according to the third inspection parameter and the fourth inspection parameter.

The system disclosed above is applicable to telecom networks (including mobile networks and fixed networks) and the Internet. Accordingly, the foregoing network device may be a basestation, mobile terminal, core node, or border gateway in the mobile network; or a router in the fixed network; or a computer terminal or router in the Internet, and so on. Network terminals include but are not limited to the foregoing network nodes.

In this embodiment, the identity-based cryptography is integrated and applied to a trusted Internet platform. The device identity is a public key, without requiring extra certificates. Therefore, extra calculation caused by certificate authentication is cut down, and the network devices can perform reciprocal authentication and key negotiation directly after being deployed.

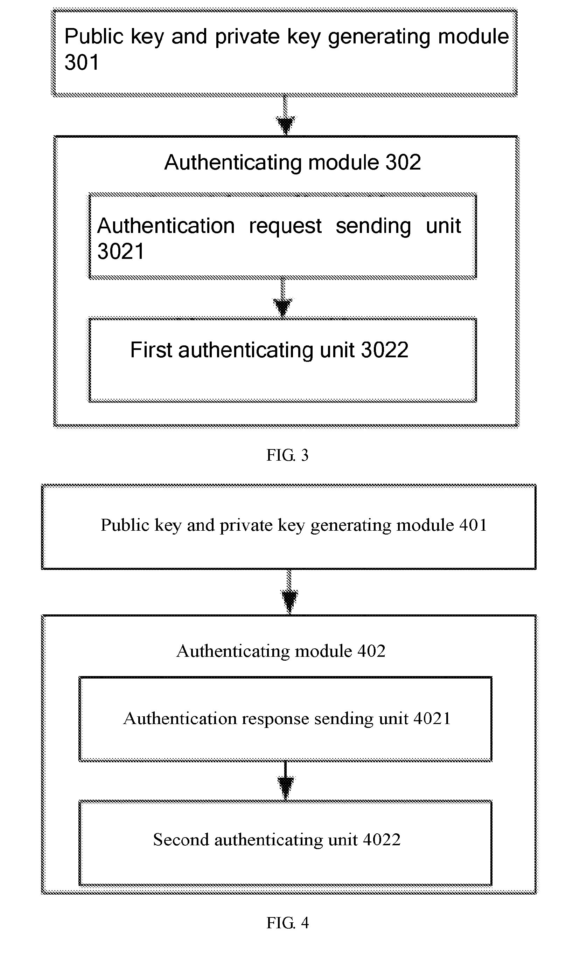

A network device is disclosed in this embodiment. The network device is configured to: generate an inspection parameter according to the public key of the peer network device and the private key of the network device, receive the inspection parameter from the peer network device, and perform authentication with the peer network device according to the generated inspection parameter and the received inspection parameter. As shown in FIG. 3, the network device includes:

a public key and private key generating module 301, configured to generate a public key and a private key of the network device according to an identifier of the network device; and
an authenticating module 302, configured to: generate an inspection parameter according to the public key of the peer network device and the private key of the network device, receive the inspection parameter from the peer network device, and perform authentication with the peer network device according to the inspection parameter generated by the network device and the received inspection parameter.

The network device authenticating module 302 includes:

an authentication request sending unit 3021, configured to send an authentication request to the peer network device; and
a first authenticating unit 3022, configured to: generate the second inspection parameter according to the public key of the peer network device and the private key of the network device, authenticate the peer network device according to the first inspection parameter sent by the peer network device and the second inspection parameter, generate the third inspection parameter according to the public key of the peer network device and the private key of the network device, and return the third inspection parameter to the peer network device.

The public key and private key generating module 301 includes: a network identifier obtaining unit, configured to obtain a network device identifier; and a Hash operation unit, configured to perform Hash function operation for an identifier of the network device, and generate at least one Hash operation value which is the public key of the network device.

Further, the network device disclosed in this embodiment includes a first security session key generating module, configured to: map the public key of the peer network device and the private key of the network device to the elements in the cyclic multiplicative group through bilinear pairing, and generate a mapping value; and generate a security session key according to the mapping value and the group key.

The network device disclosed above may be a basestation, mobile terminal, core node, or border gateway in the mobile network; or a router in the fixed network; or a computer terminal or router in the Internet, and so on. Network devices include but are not limited to the foregoing network nodes.

In the network device disclosed in this embodiment, the identity-based cryptography is integrated and applied to a trusted Internet platform. The device identity is a public key, without requiring extra certificates. Therefore, extra calculation caused by certificate authentication is cut down, and the network device can perform reciprocal authentication and key negotiation directly after being deployed.

A network device is disclosed in this embodiment. The network device is configured to: generate an inspection parameter according to the public key of the peer network device and the private key of the network device, receive the inspection parameter from the peer network device, and perform authentication with the peer network device according to the generated inspection parameter and the received inspection parameter. As shown in FIG. 4, the network device includes:

a public key and private key generating module 401, configured to generate a public key and a private key of the network device according to an identifier of the network device; and
an authenticating module 402, configured to: generate an inspection parameter according to the public key of the peer network device and the private key of the network device, receive the inspection parameter from the peer network device, and perform authentication with the peer network device according to the inspection parameter generated by the network device and the received inspection parameter.

The network device authenticating module 402 includes:

an authentication response sending unit 4021, configured to: generate the first inspection parameter according to the public key of the peer network device and the private key of the network device, and returning an authentication response inclusive of the first inspection parameter to the peer network device; and
a second authenticating unit 4022, configured to: generate the fourth inspection parameter according to the public key of the peer network device and the private key of the network device, and authenticate the peer network device according to the third inspection parameter sent by the peer network device and the fourth inspection parameter.

The public key and private key generating module 401 includes: a network identifier obtaining unit, configured to obtain a network device identifier; and a Hash operation unit, configured to: perform Hash function operation for an identifier of the network device, and generate at least one Hash operation value which is the public key of the network device.

Further, the network device includes a second security session key generating module, configured to: map the public key of the peer network device and the private key of the network device to the elements in the cyclic multiplicative group through bilinear pairing, and generate a mapping value; and generate a security session key according to the mapping value and the group key.

The network device disclosed above may be: a basestation, mobile terminal, core node, or border gateway in the mobile network; or a router in the fixed network; or a computer terminal or router in the Internet, and so on. Network devices include but are not limited to the foregoing network nodes.

In the network device disclosed in this embodiment, the identity-based cryptography is integrated and applied to a trusted Internet platform. The device identity is a public key, without requiring extra certificates. Therefore, extra calculation caused by certificate authentication is cut down, and the network device can perform reciprocal authentication and key negotiation directly after being deployed.

To sum up, the bidirectional authentication method, the system, and the network device disclosed herein are based on the elliptic curve bilinear pairing technology and the identity-based cryptography. The device identity is a public key, without requiring extra certificates. Therefore, extra calculation caused by certificate authentication is cut down, and the network can perform reciprocal authentication and key negotiation directly after being deployed. Each network device has a group key shared by the whole group and a private key of each device, thus providing high security and practicality. The group key ensures the network devices in the same group to perform reciprocal authentication and key negotiation, and the private key of each terminal prevents impact on other devices when the group key of a device is cracked, which is essential in large networks. This feature protects the existing investments after a device is cracked, without the need of replacing the private key of other devices. The identity-based trusted chip is conducive to network deployment, and simplifies key management.

Part of the steps in the technical solution disclosed in the foregoing embodiments may be implemented through software. The software is stored in a readable storage medium such as PC floppy disk, hard disk, and compact disk.

The word "receive" in the embodiments of the present invention may be understood as obtaining information from other modules proactively or receiving the information sent by other modules.

It is understandable to those skilled in the art that the accompanying drawings are for illustrating the preferred embodiments only, and the modules or processes in the accompanying drawings are not mandatory.

It is understandable to those skilled in the art that the modules in the apparatuses in the embodiments of the present invention may be distributed in the apparatuses in the way described herein, or distributed in other ways, for example, in one or more other apparatuses. The modules in the foregoing embodiments may be combined into one, or split into several submodules.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods disclosed in the embodiments of the present invention.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for bidirectional authentication, comprising:

generating, by a first network device, an inspection parameter according to a public key of a second network device and a private key of the first network device;
generating, by the second network device, an inspection parameter according to a public key of the first network device and a private key of the second network device,
wherein the public key and the private key of the first network device are obtained according to an identifier of the first network device, and the public key and the private key of the second network device are obtained according to an identifier of the second network device;
authenticating, by the first network device, the second network device according to the inspection parameter generated by the first network device and the inspection parameter received from the second network device; and
authenticating, by the second network device, the first network device according to the inspection parameter generated by the second network device and the inspection parameter received from the first network device.

2. The method of claim 1, wherein before the process of generating inspection parameter, the method comprises:

sending, by the first network device, an authentication request to the second network device;

wherein the process of generating inspection parameter comprises:

generating, by the second network device, a first inspection parameter according to the public key of the first network device and the private key of the second network device;
generating, by the first network device, a second inspection parameter according to the public key of the second network device and the private key of the first network device, and authenticating the second network device according to the first inspection parameter and the second inspection parameter;
generating, by the first network device, a third inspection parameter according to the public key of the second network terminal and the private key of the first network device, and returning the third inspection parameter to the second network device; and

generating, by the second network device, a fourth inspection parameter according to the public key of the first network device and the private key of the second network device, and authenticating the first network device according to the third inspection parameter and the fourth inspection parameter; and

wherein the process of authenticating comprises:

returning, by the second network device, an authentication response inclusive of the first inspection parameter to the first network device;
authenticating, by the first network device, the second network device according to the first inspection parameter and the second inspection parameter; and
authenticating, by the second network device, the first network device according to the third inspection parameter and the fourth inspection parameter.

**3.** The method of claim 1, wherein the process of obtaining the public key and the private key of the first network device according to an identifier of the first network device comprises:

performing Hash function operation for the identifier of the first network device to generate a first Hash operation value which is the public key of the first network device; and
multiplying the first Hash operation value and a first private key from a network key distributor to obtain the private key of the first network device; and

wherein the process of obtaining the public key and the private key of the second network device according to an identifier of the second network device comprises:

performing Hash function operation for the identifier of the second network device to generate a second Hash operation value which is the public key of the second network device; and
multiplying the second Hash operation value and a second private key from a network key distributor to obtain the private key of the second network device.

**4.** The method of claim 2, wherein the process of sending the authentication request to the second network device comprises:

sending the identifier of the first network device and a first request datum obtained according to a generator of a cyclic additive group, by the first network device, as the authentication request to the second network device.

**5.** The method of any one of claims 1-4, further comprising:

mapping, by the first network device, the public key and the private key of the first network device to elements in a cyclic multiplicative group through bilinear pairing to generate a first mapping value; and generating a first security session key according to the first mapping value and a group key;
mapping, by the second network device, the public key and the private key of the second network device to elements in a cyclic multiplicative group through bilinear pairing to generate a second mapping value; and generating a second security session key according to the second mapping value and a group key.

**6.** A network system, comprising:

a first network device, configured to: generate an inspection parameter according to a public key of a second network device and a private key of the first network device, receive a inspection parameter from the second network device, and perform authentication with the second network device according to the generated inspection parameter and the received inspection parameter; and
a second network device, configured to: generate an inspection parameter according to a public key of the first network device and a private key of the second network device, receive the inspection parameter from the first network device, and perform authentication with the first network device according to the generated inspection parameter and the received inspection parameter.

**7.** The network system of claim 6, further comprising a network key distributor, configured to generate a system parameter and a group key, and generate a private key of the first network device and a private key of the second network device respectively according to an identifier of the first network device and an identifier of the second network device;

wherein the first network device is configured: to generate a public key of the network device according to the identifier of the first network device, generate a second inspection parameter according to the public key of the second network device and the private key of the first network device, authenticate the second network device according to the first inspection parameter and the second inspection parameter, generate a third inspection parameter according to the public key of the second network device and the private key of the first network device, and return the third inspection parameter to the second network device; and

wherein the second network device is configured to: generate a public key of the second network device according to an identifier of the second network device, generate a first inspection parameter according to the public key of the first network device and the private key of the second network device, return an authentication response inclusive of the first inspection parameter to the first network device, generate a fourth inspection parameter according to the public key of the first network device and the private key of the second network device, and authenticate the first network device according to the third inspection parameter and the fourth inspection parameter.

8. A network device, comprising:

a public key and private key generating module, configured to generate a public key and a private key of the network device according to an identifier of the network device; and

an authenticating module, configured to: generate an inspection parameter according to the public key of a peer network device and the private key of the network device, receive the inspection parameter from the peer network device, and perform authentication with the peer network device according to the generated inspection parameter and the received inspection parameter.

9. The network device of claim 8, wherein the network device authenticating module comprises:

an authentication request sending unit, configured to send an authentication request to the peer network device; and

a first authenticating unit, configured to: generate a second inspection parameter according to the public key of the peer network device and the private key of the network device, authenticate the peer network device according to the first inspection parameter sent by the peer network device and the second inspection parameter, generate the third inspection parameter according to the public key of the peer network device and the private key of the network device, and return the third inspection parameter to the peer network device.

10. The network device of claim 8, wherein the public key and private key generating module comprises:

a network identifier obtaining unit, configured to obtain an identifier of the network device identifier; and
a Hash operation unit, configured to perform Hash function operation for the identifier of the network device, and generate at least one Hash operation value which is the public key of the network device.

11. The network device of claim 9 or 10, further comprising:

a first security session key generating module, configured to map the public key of the peer network device and the private key of the network device to the elements in the cyclic multiplicative group through bilinear pairing, and generate a first mapping value, and generate a first security session key according to the first mapping value and the group key.

12. The network device of claim 8, wherein the network device authenticating module comprises:

an authentication response sending unit, configured to generate a first inspection parameter according to the public key of the peer network device and the private key of the network device, and return an authentication response inclusive of the first inspection parameter to the peer network device; and
a second authenticating unit, configured to generate a fourth inspection parameter according to the public key of the peer network device and the private key of the network device, and authenticate the peer network device according to the third inspection parameter sent by the peer network device and the fourth inspection parameter.

13. The network device of claim 12, wherein the public key and private key generating module comprising:

a network identifier obtaining unit, configured to obtain a network device identifier; and

a Hash operation unit, configured to perform Hash function operation for an identifier of the network device, and generate a Hash operation value which is the public key of the network device.

14. The network device of claim 12 or 13, further comprising a second security session key generating module, configured to map the public key of the peer network device and the private key of the network device to the elements in the cyclic multiplicative group through bilinear pairing, and generate a second mapping value, and generate a second security session key according to the second mapping value and the group key.

```
┌─────────────────────────────────────────────────────────────┐
│ The public key and the private key of the first trusted      │  ╱ 101
│ network terminal and the second trusted network terminal     │
│ are calculated respectively                                  │
└─────────────────────────────────────────────────────────────┘
                            │
                            ▼
┌─────────────────────────────────────────────────────────────┐
│ The first trusted network terminal selects the first random  │  ╱ 102
│ number, calculates the first request datum, and sends an     │
│ authentication request to the second trusted network terminal│
└─────────────────────────────────────────────────────────────┘
                            │
                            ▼
┌─────────────────────────────────────────────────────────────┐
│ The second trusted network terminal receives the             │  ╱ 103
│ authentication request, selects the second random number,    │
│ and calculates the second request datum and the first        │
│ inspection parameter                                         │
└─────────────────────────────────────────────────────────────┘
                            │
                            ▼
┌─────────────────────────────────────────────────────────────┐
│ The second trusted network terminal generates an             │  ╱ 104
│ authentication response, and returns it to the first trusted │
│ network terminal                                             │
└─────────────────────────────────────────────────────────────┘
                            │
                            ▼
┌─────────────────────────────────────────────────────────────┐
│ The first trusted network terminal receives the              │  ╱ 105
│ authentication response and calculates the second inspection │
│ parameter                                                    │
└─────────────────────────────────────────────────────────────┘
                            │
                            ▼
                    ◇ 106
          The first trusted network terminal judges         No
          whether the first inspection parameter is equal ──────┐
          to the second inspection parameter                    │
                            │ Yes                                │
                            ▼                                    │
┌─────────────────────────────────────────────────────────────┐ │
│ The second trusted network terminal passes authentication,   │ │ ╱ 107
│ and the first trusted network terminal calculates the third  │ │
│ inspection parameter and returns it to the second trusted    │ │
│ network terminal, and calculates the first security session  │ │
│ key                                                          │ │
└─────────────────────────────────────────────────────────────┘ │
                            │                                    │
                            ▼                                    │
┌─────────────────────────────────────────────────────────────┐ │
│ The second trusted network terminal passes authentication,   │ │ ╱ 108
│ and the first trusted network terminal calculates the third  │ │
│ inspection parameter and returns it to the second trusted    │ │
│ network terminal, and calculates the first security session  │ │
│ key                                                          │ │
└─────────────────────────────────────────────────────────────┘ │
                            │                                    │
                            ▼                                    │
                    ◇ 109                                        │
          The second trusted network terminal judges     No     │
          whether the third inspection parameter is equal ──────►│
          to the fourth inspection parameter                     │
                            │ Yes            ╱ 110         111 ╱  │
                            ▼                                    ▼
┌─────────────────────────────────────────────────┐    ┌──────────┐
│ The first trusted network terminal passes        │    │ Authorizat│
│ authentication, and the second trusted network   │    │ ion failed│
│ terminal calculates the second security session  │    └──────────┘
│ key                                              │
└─────────────────────────────────────────────────┘
```

FIG. 1

FIG. 2

Public key and private key generating module 301

Authenticating module 302

Authentication request sending unit 3021

First authenticating unit 3022

FIG. 3

Public key and private key generating module 401

Authenticating module 402

Authentication response sending unit 4021

Second authenticating unit 4022

FIG. 4

# INTERNATIONAL SEARCH REPORT

| | International application No. |
|---|---|
| | PCT/CN2008/073097 |

**A. CLASSIFICATION OF SUBJECT MATTER**

H04L 29/06 (2006.01) i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

WPI;EPODOC;PAJ;CPRS;CNKI: two way, mutual, authentication, key, public, common, secret, private, hash, map, function

**C. DOCUMENTS CONSIDERED TO BE RELEVANT**

| Category* | Citation of document, with indication, where appropriate, of the relevant passages | Relevant to claim No. |
|---|---|---|
| PX | CN101179380A (UNIV SHANGHAI JIAOTONG) 14 May 2008 (14.05.2008) The whole document | 1-14 |
| X | Jiang,Xiaoyu et al. A Two-way Authentication Technology for HFC Access, Cable Television Technology, 2005,No.8, pages 22-24, ISSN 1008-5351 | 1-2,6,8-9,12 |
| Y | See above | 3-5,7,10-11,13-14 |
| Y | CN1925390A (HU Y) 07 March 2007(07.03.2007) Page 9 line10 to page 11 line 24 of the description | 3-5,7,10-11,13-14 |
| A | JP2007189422A (DOSHISHA) 26 July 2007(26.07.2007) The whole document | 1-14 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 Jan. 2009(15.01.2009) | **12 Feb. 2009 (12.02.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LV, He Telephone No. (86-10)010-62411400 |
|---|---|

Form PCT/ISA/210 (second sheet) (April 2007)

## INTERNATIONAL SEARCH REPORT
### Information on patent family members

| | International application No. |
|---|---|
| | PCT/CN2008/073097 |

| Patent Documents referred in the Report | Publication Date | Patent Family | Publication Date |
|---|---|---|---|
| CN101179380A | 14.05.2008 | NONE | |
| CN1925390A | 07.03.2007 | NONE | |
| JP2007189422A | 26.07.2007 | NONE | |

Form PCT/ISA/210 (patent family annex) (April 2007)